# EUROPÄISCHE PATENTSCHRIFT

(11) **EP 2 609 348 B1**
(45) Veröffentlichungstag und Bekanntmachung des Hinweises auf die Patenterteilung: **19.03.2014**
(21) Anmeldenummer: 11755251.3
(22) Anmeldetag: 04.08.2011
(51) Int. Cl.: F16H 63/34

(54) **HYDRAULISCHE STEUERUNG FÜR EIN AUTOMATIKGETRIEBE EINES KRAFTFAHRZEUGS**
HYDRAULIC CONTROL FOR AN AUTOMATIC TRANSMISSION OF A MOTOR VEHICLE
COMMANDE HYDRAULIQUE POUR UNE TRANSMISSION AUTOMATIQUE D'UN VÉHICULE AUTOMOBILE

(30) Priorität: 25.08.2010 DE 102010035505
(43) Veröffentlichungstag der Anmeldung: 03.07.2013
(73) Patentinhaber: Daimler AG, 70327 Stuttgart (DE)
(72) Erfinder: SCHINDLER, Jörg, 74321 Bietigheim-Bissingen (DE); BARAGA, Michael, 70327 Stuttgart (DE); BRANDENBURG, Markus, 73730 Esslingen (DE); KALCZYNSKI, Henrik, 70374 Stuttgart (DE); KULL, Thomas, 71332 Waiblingen (DE)
(74) Vertreter: JENSEN & SON
(86) Internationale Anmeldenummer: PCT/EP2011/003904
(87) Internationale Veröffentlichungsnummer: WO 2012/025192

(56) Entgegenhaltungen:
- DE-A1- 10 136 425
- DE-A1-102008 055 626
- US-A- 5 415 076
- US-A1- 2007 056 399
- US-B1- 6 196 247

## Beschreibung

Die Erfindung betrifft eine hydraulische Steuerung für ein Automatikgetriebe eines Kraftfahrzeugs gemäß dem Oberbegriff des Anspruchs 1.

Die DE 101 36 425 A1 beschreibt eine hydraulische Steuerung mit einem Parksperrenbetätigungssystem für ein Automatikgetriebe eines Kraftfahrzeugs. Das Parksperrenbetätigungssystem verfügt über einen Parksperrenschieber in Form eines Umschaltventils und eine Parksperren-Kolben-Zylindereinheit mit einem Parksperrenkolben. Durch Zuführen von Betriebsfluid über den Parksperrenschieber in einen ersten Parksperren-Druckraum ist der Parksperrenkolben in eine erste Betätigungsrichtung verschiebbar. Bei einer Verschiebung des Parksperrenkolbens in eine der ersten Betätigungsrichtung entgegen gesetzten zweiten Betätigungsrichtung muss Betriebsfluid aus dem ersten Parksperren-Druckraum abgeführt werden. Das bei einer Verschiebung des Parksperrenkolbens in die zweite Betätigungsrichtung aus dem ersten Druckraum abgeführte Betriebsfluid fließt über das Umschaltventil zu einem Tank ab. Zur Verschiebung des Parksperrenkolbens in die zweite Betätigungsrichtung wird Betriebsfluid über den Parksperrenschieber in einen zweiten Parksperren-Druckraum geleitet, wobei der erste vom zweiten Druckraum vom Parksperrenkolben getrennt wird.

Demgegenüber ist es die Aufgabe der Erfindung, eine hydraulische Steuerung für ein Automatikgetriebe vorzuschlagen, mittels welcher eine Parksperre schnell und sicher betätigt, insbesondere eingelegt werden kann. Erfindungsgemäß wird die Aufgabe durch eine hydraulische Steuerung mit den Merkmalen des Anspruchs 1 gelöst.

Erfindungsgemäß weist das Parksperrenbetätigungssystem einen Entleerschieber auf, mittels welchem der erste Parksperren-Druckraum mit einem Tank verbunden werden kann. Damit kann bei einer Verschiebung des Parksperrenkolbens in die zweite Betätigungsrichtung, bei welcher Betriebsfluid aus dem ersten Parksperren-Druckraum abgeführt werden muss, das Betriebsfluid über den Entleerschieber direkt in den Tank abfließen, ohne durch den Parksperrenschieber geleitet zu werden. Der Entleerschieber ist insbesondere so ausgeführt, dass er zumindest in einer Entleer-Stellung einen geringen Strömungswiderstand aufweist und so das Betriebsfluid einfach und schnell in Richtung Tank abfließen kann. Der Parksperrenschieber weist üblicherweise einen größeren Strömungswiderstand auf, da er für die sichere und exakte Ansteuerung der Parksperre ausgelegt wird, was geringe maximale Durchflussquerschnitte erforderlich macht.

Eine Entleerung über den Entleerschieber ist insbesondere dann wichtig, wenn eine Betätigungskraft in Richtung der zweiten Betätigungsrichtung nicht sehr groß ist bzw. keine große Betätigungskraft aufgebracht werden kann. Dies ist insbesondere dann der Fall, wenn der zur Verfügung stehende Systemdruck oder Arbeitsdruck der hydraulischen Steuerung sehr gering ist. Dies tritt beispielsweise dann auf, wenn eine Antriebsmaschine, insbesondere ein Verbrennungsmotor, der eine Pumpe der hydraulischen Steuerung antreibt, gestoppt wird oder bereits gestoppt ist.

Zum Einlegen der Parksperre, also zum Sichern des Kraftfahrzeugs gegen ungewolltes Wegrollen wird der Parksperrenkolben insbesondere in die zweite Betätigungsrichtung verschoben. Mit dem Parksperrenkolben ist beispielsweise eine so genannte Parksperrenklinke zumindest mittelbar verbunden, die zum Einlegen der Parksperre formschlüssig mit einem so genannten Parksperrenrad, das drehfest mit einer Getriebeausgangswelle verbunden ist, in Eingriff gebracht wird. Damit wird durch die erfindungsgemäße hydraulische Steuerung insbesondere ein sicheres und schnelles Einlegen der Parksperre ermöglicht.

Unter einem "Tank" soll insbesondere ein Raum insbesondere innerhalb des Automatikgetriebes verstanden werden, in dem sich überschüssiges Betriebsfluid sammelt und aus welchem eine Pumpe der hydraulischen Steuerung Betriebsfluid ansaugen kann. Es ist dabei nicht erforderlich, dass der Entleerschieber den ersten Parksperren-Druckraum direkt mit dem Tank verbindet. Es ist völlig ausreichend, wenn eine Verbindung zu einem so genannten Tankabfluss hergestellt wird, über den Betriebsfluid ohne nennenswerten Strömungswiderstand in den Tank abfließen kann.

Das Automatikgetriebe ist beispielsweise als ein Getriebe mit mehreren gekoppelten Planetensätzen ausgeführt. Es ist insbesondere als ein Automatikgetriebe entsprechend der DE 10 2008 055 626 A1 der Anmelderin ausgeführt. Das Automatikgetriebe kann aber auch beispielsweise als ein automatisiertes Zahnräderwechselgetriebe, als Doppelkupplungsgetriebe oder als ein stufenloses Getriebe ausgeführt sein.

In Ausgestaltung der Erfindung ist der Parksperrenschieber so ausgeführt, dass in seiner Grundstellung über ihn keine Verbindung zwischen einer Parksperren-Verbindungsleitung und dem Tank besteht. Über die Parksperren-Verbindungsleitung kann Betriebsfluid vom Parksperrenschieber zum ersten Parksperren-Druckraum geleitet oder auch von ihm abgeführt werden. Unter einer Grundstellung ist dabei die Stellung zu verstehen, die der Parksperrenschieber ohne Anliegen eines Steuerdrucks einnimmt. Der Parksperrenschieber nimmt die Grundstellung damit auch insbesondere bei stehendem Verbrennungsmotor ein. In der Grundstellung des Parksperrenschiebers besteht keine gewollte Verbindung zwischen der Parksperren-Verbindungsleitung und dem Tank, Betriebsfluid könnte in dieser Stellung nur über enge Spalte, so genannte Schieberspalte von der Parksperren-Verbindungsleitung zum Tank gelangen. Wenn der Parksperrenkolben in die zweite Betätigungsrichtung bewegt werden soll und der Parksperrenschieber auf Grund zu geringem System- oder Arbeitsdruck, also insbesondere bei stehendem Verbrennungsmotor, nicht mehr aus seiner Grundstellung gebracht werden kann, dann müsste das Betriebsfluid, das aus dem ersten Parksperren-Druckraum abgeführt werden muss, über die genannten Schieberspalte des Parksperrenschiebers zum Tank abfließen. Damit würde die Bewegung des Parksperrenkolbens in die zweite Betätigungsrichtung, die insbesondere zum Einlegen der Parksperre notwendig ist, sehr lange dauern und das Fahrzeug könnte nicht schnell gegen Wegrollen gesichert werden. Das erfindungsgemäße Vorsehen des Entleerschiebers ermöglicht ein sehr schnelles Abführen von Betriebsfluid aus dem ersten Parksperren-Druckraum auch bei stehendem Verbrennungsmotor und damit insbesondere ein sehr schnelles Einlegen der Parksperre.

In Ausgestaltung der Erfindung ist der Entleerschieber zwischen dem Parksperrenschieber und der Parksperren-Kolben-Zylindereinheit angeordnet und weist zumindest zwei Stellungen auf. In einer Füll-Stellung ist eine Parksperren-Verbindungsleitung zwischen dem Parksperrenschieber und dem Entleerschieber über den Entleerschieber mit dem ersten Parksperren-Druckraum verbunden. In einer Entleer-Stellung ist der erste Parksperren-Druckraum über den Entleerschieber mit dem Tank verbunden und die Parksperren-Verbindungsleitung wird vom Entleerschieber abgeschlossen. Unter "abgeschlossen" soll insbesondere verstanden werden, dass durch den Entleerschieber ein Abfluss von Betriebsfluid aus der Parksperren-Verbindungsleitung so weit verhindert wird, dass sich ein Druck in der Parksperren-Verbindungsleitung aufbauen kann. Als Steuerdruck für eine Umschaltung zwischen den genannten Stellungen des Entleerschiebers wird ein Druck in der genannten Parksperren-Verbindungsleitung zwischen dem Parksperrenschieber und dem Entleerschieber auf den Entleerschieber geleitet. Um den Parksperrenschieber in die erste Betätigungsrichtung zu bewegen, also insbesondere um die Parksperre auszulegen, muss dem ersten Parksperren-Druckraum Betriebsfluid über den Parksperrenschieber und die Parksperren-Verbindungsleitung Betriebsfluid unter Druck zugeführt werden. Dieser Druck wirkt als Steuerdruck auf den Entleerschieber, so dass kein separater Steuerdruck erzeugt oder abgeleitet werden muss. Der Aufbau der hydraulischen Steuerung ist damit besonders einfach.

Der Entleerschieber weist insbesondere nur die Füll-Stellung und die Entleer-Stellung auf. Der Steuerdruck wirkt dann gegen eine Entleer-Feder, wobei der Entleerschieber durch die Entleer-Feder in die Entleer-Stellung gebracht werden kann. Sofern kein Steuerdruck am Entleerschieber anliegt, befindet er sich also in der Entleer-Stellung. Soll nun der Parksperrenschieber in die erste Betätigungsrichtung bewegt, also Betriebsfluid dem ersten Parksperren-Druckraum zugeführt werden, so wird über den Parksperrenschieber Betriebsfluid in die Parksperren-Verbindungsleitung zugeführt, so dass sich in der Parksperren-Verbindungsleitung ein Druck aufbaut, der als Steuerdruck auf den Entleerschieber wirkt und diesen in die Füll-Stellung bewegt. Der Aufbau der hydraulischen Steuerung ist damit besonders einfach, da die Parksperren-Verbindungsleitung doppelt genutzt werden kann. Zum einen wird sie mit dem Entleerschieber verbunden, damit über sie Betriebsfluid in den ersten Parksperren-Druckraum gefördert werden kann und zum zweiten wird von ihr der Steuerdruck für den Entleerschieber abgeleitet. Damit wird auch der erforderliche Bauraum für den Entleerschieber sehr gering. Außerdem wird durch diesen Aufbau des Entleerschiebers sichergestellt, dass in den Fällen, in denen kein Systemdruck in der hydraulischen Steuerung zur Verfügung steht, der Entleerschieber von der Entleer-Feder in die Entleer-Stellung gebracht wird und so eine schnelle Betätigung des Parksperrenschiebers in die zweite Betätigungsrichtung, also insbesondere zum Einlegen der Parksperre, ermöglicht wird.

In Ausgestaltung der Erfindung weist die Parksperren-Kolben-Zylindereinheit eine Parksperren-Feder auf, welche so angeordnet ist, dass sie eine Kraft auf den Parksperrenkolben in Richtung der zweiten Betätigungsrichtung aufbringt. Die Parksperren-Feder ist dabei insbesondere so ausgelegt, dass sie in dem Fall, in dem der erste Parksperren-Druckraum über den Entleerschieber mit dem Tank verbunden ist, den Parksperrenkolben in die zweite Betätigungsrichtung, also insbesondere zum Einlegen der Parksperre verschieben kann. Damit kann gewährleistet werden, dass eine Betätigung der Parksperre, insbesondere ein Einlegen der Parksperre auch bei sehr niedrigem Systemdruck der hydraulischen Steuerung möglich ist. Insbesondere ist das Einlegen der Parksperre auch bei stehender Antriebsmaschine möglich.

In Ausgestaltung der Erfindung weist die Parksperren-Kolben-Zylindereinheit einen zweiten Parksperren-Druckraum auf, in den zur Verschiebung des Parksperrenkolbens in die zweite Betätigungsrichtung, also insbesondere zum Einlegen der Parksperre, über den Parksperrenschieber Betriebsfluid zuführbar ist. Damit kann bei entsprechender Stellung des Parksperrenschiebers im zweiten Parksperren-Druckraum ein Druck aufgebaut werden, so dass eine Betätigungskraft auf den Parksperrenkolben in die zweite Betätigungsrichtung, also insbesondere zum Einlegen der Parksperre wirkt. Es kann also durch die entsprechende Einstellung des Parksperrenschiebers eine Betätigungskraft, die alleine oder zusätzlich zur Parksperren-Feder wirkt, in Richtung der zweiten Betätigungsrichtung aufgebracht werden. Damit ist eine sichere und robuste Betätigung der Parksperre möglich.

Der Parksperrenschieber ist insbesondere so ausgeführt, dass über ihn Betriebsfluid entweder zum ersten oder zweiten Parksperren-Druckraum Betriebsfluid zuführbar ist und der jeweils andere Parksperren-Druckraum bzw. im Fall des ersten Parksperren-Druckraums die genannte Parksperren-Verbindungsleitung mit dem Tank verbunden ist.

In Ausgestaltung der Erfindung weist die Parksperren-Kolben-Zylindereinheit eine ansteuerbare Rastierung auf, mittels welcher eine Position des Parksperrenkolbens festgelegt werden kann. Die Rastierung weist beispielsweise einen Hubmagnet auf, der in eine entsprechende Kontur einer Kolbenstange der Parksperren-Kolben-Zylindereinheit eingreifen kann. Die Rastierung kann auch ein hydraulisch oder pneumatisch betätigtes Sperrelement aufweisen, das in die genannte Kontur eingreifen kann. Die Rastierung ist insbesondere so ausgelegt, dass sie in eine Betätigungsrichtung überdrückt und in die andere nicht überdrückt werden kann. Dies kann beispielsweise durch eine geeignete Ausführung der genannten Kontur und des Hubmagnets realisiert werden. Unter "überdrücken" soll dabei insbesondere verstanden werden, dass der Parksperrenkolben trotz aktivierter Rastierung verschoben werden kann. Die Rastierung ist insbesondere so ausgeführt, dass sie in die zweite Betätigungsrichtung also zum Einlegen der Parksperre überdrückt werden kann. Dazu weist die genannte Kontur beispielsweise eine Schräge auf, über die der Hubmagnet oder das Sperrelement zurückgedrückt werden kann. Die Rastierung ist dabei so ausgelegt, dass sie durch die Kombination der Betätigungskräfte auf Grund des Drucks im zweiten Parksperren-Druckraum und der Parksperren-Feder überdrückt werden kann. Damit kann durch einen entsprechenden Druck im zweiten Parksperren-Druckraum die Parksperre auch dann eingelegt werden, wenn der Hubmagnet oder das Sperrelement nicht mehr angesteuert werden kann. In die erste Betätigungsrichtung, also zum Auslegen der Parksperre ist kein Überdrücken der Rastierung möglich. Mit dieser Auslegung der Rastierung kann auch bei einem Ausfall des Hubmagneten oder des Sperrelements die Parksperre ein- aber nicht mehr ausgelegt werden. Damit kann das Kraftfahrzeug gegen Wegrollen oder unerwünschtes Abschleppen gesichert werden.

In Ausgestaltung der Erfindung weist die hydraulische Steuerung ein Vorsteuerventil und eine erste und eine zweite Ventileinheit auf. Ein mittels des Vorsteuerventils eingestellter Vorsteuerdruck ist als Steuerdruck auf die erste und zweite Ventileinheit, sowie auf den Parksperrenschieber als dritte Ventileinheit leitbar. Mittels einer Gegendruckleitung kann ein am Parksperrenkolben gegen den Steuerdruck wirkender Gegendruck an den Parksperrenschieber angelegt und damit eine Betätigung des Parksperrenschiebers auch bei hohem Steuerdruck verhindert werden. Damit ist es vorteilhaft möglich, mit nur einem Vorsteuerventil drei Ventileinheiten anzusteuern. Gleichzeitig kann durch das Anlegen des Gegendrucks an den Parksperrenschieber die Betätigung des Parksperrenschiebers verhindert werden, so dass die erste oder insbesondere die zweite Ventileinheit betätigt werden kann, ohne dass gleichzeitig der Parksperrenschieber betätigt wird. Dies ermöglicht eine große Zahl von verschiedenen Ansteuerungsmöglichkeiten der einzelnen Ventileinheiten mit nur einem Vorsteuerventil und damit einen großen Funktionsumfang der hydraulischen Steuerung mit wenigen hydraulischen Bauteilen.

Das Vorsteuerventil ist beispielsweise als ein Regelmagnetventil, insbesondere als ein so genanntes Direktsteuerventil ausgeführt. Das Vorsteuerventil wird mit einem Versorgungsdruck beispielsweise in Form eines Arbeitsdrucks oder eines Ventilversorgungsdrucks versorgt und leitet daraus entsprechend der Ansteuerung durch eine elektronische Getriebesteuerung einen gewünschten Vorsteuerdruck ab.

Der Parksperrenschieber ist insbesondere als ein Schaltschieber ausgeführt, auf dessen Schieber auf einer Seite der Vorsteuerdruck als Steuerdruck und auf einer gegenüberliegenden Seite des Schiebers der Gegendruck wirken kann. Zusätzlich weist der Parksperrenschieber insbesondere eine Feder auf, die eine dem Vorsteuerdruck entgegen wirkende Kraft auf den Schieber aufbringen kann. Durch eine entsprechende Auslegung der wirksamen Flächen am Schieber, der Druckbereiche des Vorsteuer- und des Gegendrucks sowie gegebenenfalls der Feder kann sichergestellt werden, dass durch Anlegen eines Gegendrucks an den Parksperrenschieber eine Betätigung des Parksperrenschiebers verhindert werden kann. Unter einer Betätigung des Parksperrenschiebers ist damit die Änderung der Schaltstellung des Schaltventils zu verstehen.

In Ausgestaltung der Erfindung ist zur Betätigung der ersten und zweiten Ventileinheit sowie des Parksperrenschiebers jeweils ein erster, zweiter und dritter Druckbereich vorgesehen. Darunter ist bei einem Schaltventil zu verstehen, dass durch Änderungen des Steuerdrucks innerhalb des dem Schaltventil zugeordneten Druckbereichs Änderungen am Zustand oder des Verhaltens des Schaltventils ergeben. Dabei wird durch eine Änderung des Steuerdrucks von einer Grenze zur anderen Grenze des Druckbereichs eine Änderung der Schaltstellung des Schaltschiebers erreicht. Eine Erhöhung des Steuerdrucks über eine obere Grenze oder eine Verringerung unter eine untere Grenze des jeweils zugeordneten Druckbereichs hat dann keine weitere Auswirkung auf die Schaltstellung des Schaltschiebers. Bei einer als Regelschieber ausgeführten Ventileinheit verändert sich bei Änderungen innerhalb des Druckbereichs der eingeregelte Druck oder die Durchflussmenge. Es ist aber auch möglich, dass sich in dem Fall in dem sich der Steuerdruck außerhalb des zugeordneten Druckbereichs befindet, er noch Einfluss auf den eingeregelten Druck oder die Durchflussmenge hat. Die Druckbereiche können sich überlappen, es ist aber auch möglich dass es zwischen den Druckbereichen jeweils einen Bereich gibt, der keinem der Druckbereiche zugeordnet ist. Der erste, zweite und dritte Druckbereich sind dabei in Richtung steigendem Druck insbesondere nacheinander angeordnet. Beispielsweise ist der ersten Ventileinheit ein Druckbereich von ca. 0 bis 3 bar, der zweiten Ventileinheit ein Druckbereich von 4 bis 5 bar und der dritten Ventileinheit ein Druckbereich von 6 bis 8 bar zugeordnet.

Durch den Gegendruck am Parksperrenschieber kann eine Betätigung des Parksperrenschiebers insbesondere bei einer gewollten Betätigung der zweiten Ventileinheit sicher vermieden werden. Durch die Aufteilung der Druckbereiche sollte dies eigentlich gar nicht vorkommen. Allerdings kann es auf Grund von Bauteiltoleranzen, Verschleiß oder Alterung der Hydraulikbauteile zu Verschiebungen und/oder Überlappungen der Druckbereiche und damit zu ungewollten Betätigungen des Parksperrenschiebers kommen. Durch das Anlegen des Gegendrucks am Parksperrenschieber kann ein sicherer Betrieb der hydraulischen Steuerung ermöglicht werden.

Es ist aber auch möglich, dass der dritte Druckbereich zwischen dem ersten und dem zweiten Druckbereich angeordnet ist. Beispielsweise ist der ersten Ventileinheit ein Druckbereich von ca. 0 bis 3 bar, dem Parksperrenschieber ein Druckbereich von 4 bis 5 bar und der zweiten Ventileinheit ein Druckbereich von 6 bis 8 bar zugeordnet

Durch die Verhinderung der Betätigung des Parksperrenschiebers durch den Gegendruck kann die erste oder zweite Ventileinheit angesteuert werden, ohne dass die Ansteuerung Auswirkungen auf den Parksperrenschieber hat. In dem genannten Beispiel kann die zweite Ventileinheit angesteuert werden, ohne dass der Parksperrenschieber betätigt wird. Damit können die zweite Ventileinheit und der Parksperrenschieber unabhängig voneinander von nur einem Vorsteuerventil angesteuert werden.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

In Ausgestaltung der Erfindung wird der Gegendruck, der am Parksperrenschieber gegen den Steuerdruck wirken kann, von einem Druck abgeleitet, der hauptsächlich eine andere Funktion erfüllt. Unter der Formulierung "hauptsächlich eine andere Funktion erfüllt" ist insbesondere zu verstehen, dass dieser Druck nicht primär dafür eingestellt wird, damit daraus der Gegendruck abgeleitet wird. Der genannte Druck wird beispielsweise eingestellt, um eine weitere Ventileinheit anzusteuern oder insbesondere dazu, um ein Schaltelement des Automatikgetriebes beispielsweise in Form einer Lamellenkupplung oder Lamellenbremse zu betätigen. Der Druck, von dem der Gegendruck abgeleitet wird, wird insbesondere so ausgewählt, dass der Gegendruck in den Situationen, in denen eine Ansteuerung der zweiten Ventileinheit sinnvoll oder notwendig ist, ausreichend hoch ist, um eine ungewollte Betätigung des Parksperrenschiebers zu verhindern.

In Ausgestaltung der Erfindung weist die hydraulische Steuerung ein Umschaltventil auf, mittels welchem der Gegendruck von einem ersten oder von einem zweiten Druck abgeleitet werden kann. Das Umschaltventil ist insbesondere als ein selbsttätig schaltendes Ventil ausgeführt, das den Gegendruck vom höheren der beiden genannten Drücke ableitet. Das Umschaltventil ist dabei insbesondere als Kugelumschaltventil ausgeführt. Damit kann die Betätigung des Parksperrenschiebers nicht nur in Abhängigkeit eines Drucks, sondern in Abhängigkeit von zwei Drücken verhindert werden. Die Ansteuerung der zweiten Ventileinheit ohne Auswirkungen auf den Parksperrenschieber ist damit in sehr vielen Situationen möglich.

In Ausgestaltung der Erfindung wird der Gegendruck von einem Druck eines Betätigungssystems eines Schaltelements des Automatikgetriebes abgeleitet. Damit kann die Ansteuerung der zweiten Ventileinheit ohne Auswirkungen auf den Parksperrenschieber dann ermöglicht werden, wenn bestimmte Gänge des Automatikgetriebes eingelegt und damit bestimmte Schaltelemente betätigt sind. Dies ist insbesondere dann vorteilhaft, wenn die Ansteuerung der zweiten Ventileinheit nur in bestimmten Gängen notwendig oder sinnvoll ist.

Die Erfindung ist besonders vorteilhaft einsetzbar, wenn die erste Ventileinheit zur Einstellung eines Schmierdrucks vorgesehen ist und die zweite Ventileinheit einem Schaltventil in Form eines Fliehölventils zugeordnet ist, mittels welchem ein Zufluss zu einem Fliehölraum eines Schaltelements des Automatikgetriebes erhöht werden kann.

Die erste Ventileinheit ist insbesondere so ausgeführt, dass ein steigender Steuerdruck einen steigenden Schmierdruck bewirkt. Bei dem oben genannten Beispiel der den Ventileinheiten zugeordneten Druckbereichen bedeutet das, dass bei der Ansteuerung des Parksperrenbetätigungssystems oder des Fliehölventils ein hoher Schmierdruck eingestellt wird.

Eine Parksperre des Parksperrenbetätigungssystems muss nur dann angesteuert, insbesondere geschlossen werden, wenn kein Gang im Automatikgetriebe eingelegt ist. Damit stellt es für das Parksperrenbetätigungssystem keinerlei funktionale Beschränkung dar, wenn in einigen Gängen wegen des Gegendrucks keine Ansteuerung der Parksperre möglich ist. Andererseits ist ein Befüllen der Fliehölhauben nur dann notwendig, wenn im Automatikgetriebe bestimmte Gänge eingelegt sind. Die Parksperre wird nur angesteuert, wenn im Automatikgetriebe kein Gang eingelegt ist. Damit kann das Fliehölventil in allen notwendigen Situationen angesteuert werden. Die Ansteuerung des Parksperrenbetätigungssystems und des Fliehölventils durch ein gemeinsames Regelmagnetventil schränkt die Funktionalitäten der beiden Systeme nicht ein.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigt:

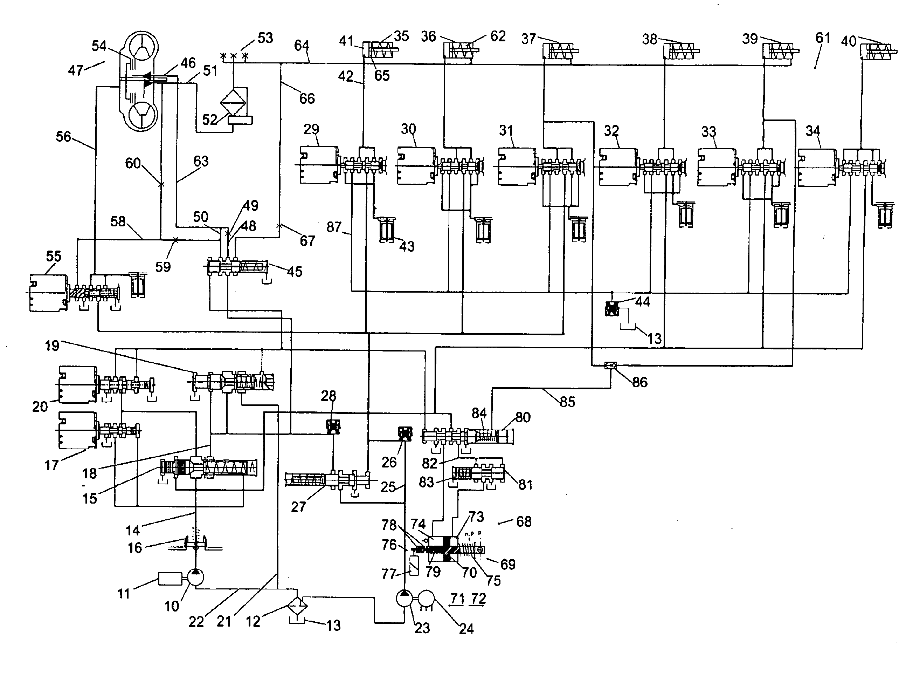

- Fig. 1: einen Hydraulikplan einer hydraulischen Steuerung eines Automatikgetriebes.

Gemäß Fig. 1 weist eine hydraulische Steuerung für ein Automatikgetriebe eines Kraftfahrzeugs eine Hauptpumpe 10 auf, die von einem Verbrennungsmotor 11 angetrieben wird. Die Hauptpumpe 10 saugt über einen Saugfilter 12 Betriebsfluid in Form von Getriebeöl aus einem Tank 13 an. In der Fig. 1 sind an mehreren Stellen Abflüsse zu einem Tank dargestellt. Dies ist so zu verstehen, dass Getriebeöl von diesen Abflüssen direkt oder indirekt in den Tank 13 gelangt. Die Hauptpumpe 10 fördert Getriebeöl in eine Arbeitsdruckleitung 14, welche einen Arbeitsdruckschieber 15 mit Getriebeöl versorgt. In der Arbeitsdruckleitung 14 ist ein Rückschlagventil 16 angeordnet, welches so ausgeführt ist, dass Getriebeöl von der Hauptpumpe 10 zum Arbeitsdruckschieber 15 fließen kann, aber nicht umgekehrt.

Der Arbeitsdruckschieber 15 ist als ein üblich aufgebauter Regelschieber ausgeführt, auf den als Steuerdruck ein von einem Regelmagnetventil-Arbeitsdruck 17 eingestellter Druck wirkt. Gemeinsam mit einer Federkraft, welche einen Grunddruck des Arbeitsdrucks einstellt, wirkt der Steuerdruck gegen den von der Arbeitsdruckleitung 14 zurückgeführten Arbeitsdruck. Durch Änderung des vom Regelmagnetventil-Arbeitsdruck 17 eingestellten Drucks, kann die Höhe des Arbeitsdrucks eingestellt werden. Erreicht der Arbeitsdruck den vom Regelmagnetventil-Arbeitsdruck 17 eingestellten Sollwert, so wird vom Arbeitsdruckschieber 15 über eine Schmierdruckleitung 18 eine Verbindung zwischen der Arbeitsdruckleitung 14 und einem Schmierdruckschieber 19 hergestellt. Der Schmierdruckschieber 19 wird also nur dann mit Getriebeöl versorgt, wenn der Arbeitsdruck seinen vom Regelmagnetventil-Arbeitsdruck 17 eingestellten Sollwert erreicht hat. Der Arbeitsdruckschieber 15 regelt damit die Arbeitsdruck in der Arbeitsdruckleitung 14 auf den vom Regelmagnetventil-Arbeitsdruck 17 eingestellten Sollwert ein.

Der Schmierdruckschieber 19 ist ebenfalls als ein üblich aufgebauter Regelschieber ausgeführt, auf den als Steuerdruck ein von einem Regelmagnetventil-Schmierdruck 20 eingestellter Druck wirkt. Das Regelmagnetventil-Schmierdruck 20 kann damit als ein Vorsteuerventil bezeichnet werden. Gemeinsam mit einer Federkraft, welche einen Grunddruck des Schmierdrucks einstellt, wirkt der Steuerdruck gegen den von der Schmierdruckleitung 18 zurückgeführten Schmierdruck. Durch Änderung des vom Regelmagnetventil-Schmierdruck 20 eingestellten Drucks, kann die Höhe des Schmierdrucks eingestellt werden. Erreicht der Schmierdruck den eingestellten Sollwert, so wird vom Schmierdruckschieber 19 eine Verbindung zwischen der Schmierdruckleitung 18 und einer Rückführleitung 21 hergestellt. Über die Rückführleitung 21 wird Getriebeöl zu einer Ansaugleitung 22, die die Hauptpumpe 10 mit dem Saugfilter 12 verbindet, zurückgeführt. Der Schmierdruckschieber 19 regelt damit den Schmierdruck in der Schmierdruckleitung auf den vom Regelmagnetventil-Schmierdruck 20 eingestellten Sollwert ein. Der Schmierdruckschieber 19 ist dabei so ausgeführt, dass der maximal benötigte Schmierdruck bei einem Steuerdruck von ca. 3 bar erreicht wird. Dem Schmierdruckschieber ist damit ein Druckbereich von 0 bis 3 bar zugeordnet. Steigt der Steuerdruck weiter an, so steigt auch der eingestellte Schmierdruck weiter an.

Das Regelmagnetventil-Arbeitsdruck 17 und das Regelmagnetventil-Schmierdruck 20 sind beide als so genannte Direktsteuerventile ausgeführt. Bei Direktsteuerventilen wirkt eine Kraft eines von einer nicht dargestellten elektronischen Steuereinrichtung angesteuerten Elektromagneten direkt als Steuerkraft auf einen Schieber. Gegen die Steuerkraft wirken eine Federkraft und ein zurückgeführter Druck, dessen Höhe von dem Direktsteuerventil entsprechend der Ansteuerung der elektronischen Steuereinrichtung eingestellt werden soll. Der von einem Direktsteuerventil eingestellte Druck wird von einem Versorgungsdruck abgeleitet. Im Fall des Regelmagnetventils-Arbeitsdruck 17 und des Regelmagnetventils-Schmierdruck 20 dient der Arbeitsdruck in der Arbeitsdruckleitung 14 als Versorgungsdruck.

Die hydraulische Steuerung kann auch einen nicht dargestellten Anschluss aufweisen, über den eine ansteuerbare Drehmomentverteilvorrichtung für einen Allradantrieb des Kraftfahrzeugs mit Arbeitsdruck versorgt werden kann.

Die hydraulische Steuerung verfügt neben der Hauptpumpe 10 über eine Zusatzpumpe 23, die von einem von der elektronischen Steuereinrichtung angesteuerten Elektromotor 24 angetrieben werden kann. Die Zusatzpumpe 23 kann zum einen die Hauptpumpe 10 in Situationen, in denen die Fördermenge der Hauptpumpe 10 nicht ausreicht, unterstützen, wobei ein maximal erreichbarer Druck der Zusatzpumpe 23 deutlich geringer ist als ein maximaler Druck der Hauptpumpe 10. Zum anderen kann die Zusatzpumpe 23 eine Grundversorgung der hydraulischen Steuerung bei stehendem Verbrennungsmotor 11 und damit stehender Hauptpumpe 10 sicherstellen. Die Zusatzpumpe 23 saugt ebenfalls über den Saugfilter 12 aus dem Tank 13 Getriebeöl an. Sie fördert Getriebeöl in eine Zusatzpumpenleitung 25, welche über ein Rückschlagventil 26 mit der Arbeitsdruckleitung 14 verbunden ist. Das Rückschlagventil 26 ist so angeordnet, dass Getriebeöl von der Zusatzpumpenleitung 25 in die Arbeitsdruckleitung 14 fließen kann, aber nicht umgekehrt. Damit kann die Zusatzpumpe 23 in dem Fall, in dem der Arbeitsdruck kleiner als ihr maximal erreichbarer Druck ist, gemeinsam mit der Hauptpumpe 10 in die Arbeitsdruckleitung 14 fördern. Die Zusatzpumpenleitung 25 ist außerdem mit einem Zusatzpumpenschieber 27 verbunden. Mittels des Zusatzpumpenschiebers 27 kann eine Verbindung zwischen der Zusatzpumpenleitung 25 und der Schmierdruckleitung 18 hergestellt werden, wobei zwischen Zusatzpumpenschieber 27 und Schmierdruckleitung 18 ein Rückschlagventil 28 so angeordnet ist, dass Getriebeöl vom Zusatzpumpenschieber 27 in die Schmierdruckleitung 18 fließen kann, aber nicht umgekehrt. In einer dargestellten Grundstellung des Zusatzpumpenschiebers 27 ist die genannte Verbindung zwischen Zusatzpumpenleitung 25 und der Schmierdruckleitung 18 unterbrochen, in einer geschalteten Stellung des Zusatzpumpenschiebers 27 ist die genannte Verbindung hergestellt. Auf den Zusatzpumpenschieber 27 wirkt als Steuerdruck der Arbeitsdruck in der Arbeitsdruckleitung 14 gegen eine Federkraft. Die Federkraft ist so ausgelegt, dass der Zusatzpumpenschieber 27 so lange in der Grundstellung bleibt, bis der Arbeitsdruck den maximal erreichbaren Druck der Zusatzpumpe 23 überschreitet. Ist dieser Druck erreicht, so wird die Verbindung zwischen der Zusatzpumpenleitung 25 und der Schmierdruckleitung 18 über den Zusatzpumpenschieber 27 hergestellt und die Zusatzpumpe 23 kann Getriebeöl in die Schmierdruckleitung 18 fördern, in der ein deutlich niedrigerer Druck als der Arbeitsdruck herrscht. Damit kann die Zusatzölpumpe 23 auch dann die Hauptpumpe 10 unterstützen, wenn der Arbeitsdruck größer als ihr maximal erreichbarer Druck ist und sie deshalb nicht mehr in die Arbeitsdruckleitung 14 fördern kann.

Über die Arbeitsdruckleitung 14 werden auch Regelmagnetventile 29, 30, 31, 32, 33 und 34 für die Betätigung von Schaltelementen des Automatikgetriebes in Form von Lamellenkupplungen und -bremsen mit Arbeitsdruck versorgt. Die Lamellenkupplungen und -bremsen sind schematisch durch Gangwechsel-Kolben-Zylindereinheiten 35, 36, 37, 38, 39 und 40 dargestellt, mittels welchen die Lamellenkupplungen und - bremsen geschlossen und geöffnet werden können. Die Gangwechsel-Kolben-Zylindereinheiten 35, 38 und 40 sind Lamellenbremsen und die Gangwechsel-Kolben-Zylindereinheiten 36, 37und 39 sind Lamellenkupplungen zugeordnet. Die Regelmagnetventile 29, 30, 31, 32, 33 und 34 sind identisch aufgebaut, so dass nur das Regelmagnetventil 29 näher erläutert wird. Das Regelmagnetventil 29 ist ebenfalls als ein Direktsteuerventil ausgeführt, das von der nicht dargestellten elektronischen Steuereinrichtung angesteuert wird. Das Regelmagnetventil 29 wird über einen Anschluss mit Arbeitsdruck versorgt. Es dient zur Einstellung eines Betätigungsdrucks in einem Gangwechsel-Druckraum 41 der Gangwechsel-Kolben-Zylindereinheit 35, mit dem es über eine Leitung 42 verbunden ist. Der Betätigungsdruck in der Leitung 42 wird als Steuerdruck auf das Regelmagnetventil 29 zurückgeführt. Um Druckschwingungen in der Leitung 42 zu vermeiden, wird der Betätigungsdruck zusätzlich an zwei weitere Anschlüsse des Regelmagnetventils 29 zurückgeführt. Als weitere Maßnahme zur Vermeidung von Druckschwingungen ist die Leitung 42 über das Regelmagnetventil 29 mit einem Druckspeicher 43 verbunden. Über eine Tankabflussleitung 87 ist das Regelmagnetventil 29 und auch die Regelmagnetventile 30, 31, 32, 33 und 34 mit dem Tank 13 verbunden. In der Tankabflussleitung 87 ist ein federbelastetes Rückschlagventil 44 angeordnet. Das Rückschlagventil 44 ist so angeordnet, dass Getriebeöl in den Tank 13 fließen kann. Es ist außerdem so ausgeführt, dass es den Durchfluss in Richtung Tank 13 nur öffnet, wenn ein Mindestdruck von beispielsweise 0,2 bis 0,4 bar in der Tankabflussleitung 87 herrscht. Damit wird sichergestellt, dass in der Tankabflussleitung 87 immer mindestens der genannte Mindestdruck anliegt. Dies bewirkt, dass die Leitung 42 und der Gangwechsel-Druckraum 41 nicht leerlaufen können, sondern immer mit Getriebeöl gefüllt sind.

Durch entsprechende Ansteuerung des Regelmagnetventils 29 kann damit ein Betätigungsdruck im Gangwechsel-Druckraum der Gangwechsel-Kolben-Zylindereinheit 35 auf- und abgebaut und so die der Gangwechsel-Kolben-Zylindereinheit 35 zugeordnete Lamellenbremse geschlossen und geöffnet werden. Durch entsprechende Ansteuerung der Regelmagnetventile 29, 30, 31, 32, 33 und 34 können damit die Lamellenkupplungen und -bremsen des Automatikgetriebes geschlossen und geöffnet werden und so die einzelnen Gänge ein- und ausgelegt werden. Die Regelmagnetventile 29, 30, 31, 32, 33 und 34 und die Gangwechsei-Kolben-Zylindereinheiten 35, 36, 37, 38, 39 und 40 können damit als ein Gangwechselsystem 61 bezeichnet werden. Mit dem hier dargestellten Gangwechselsystem 61 können insgesamt neun Vorwärtsgänge und ein Rückwärtsgang geschaltet werden.

Die Schmierdruckleitung 18 ist über ein Fliehölventil 45 und eine erste Zuführleitung 63, welches als ein ansteuerbarer Schaltschieber ausgeführt ist, mit einem Wandlerzufluss 46 eines hydrodynamischen Drehmomentwandlers 47 verbunden. Auf das Fliehölventil 45 wirkt als Steuerdruck der vom Regelmagnetventil-Schmierdruck 20 eingestellte Druck gegen eine Federkraft. Die Federkraft ist so ausgelegt, dass das Fliehölventil 45 bei Überschreiten einer Druckgrenze von beispielsweise 4 bar aus einer dargestellten Grundstellung in eine Schaltstellung wechselt. Der vom Regelmagnetventil-Schmierdruck 20 eingestellte Druck wirkt also sowohl am Schmierdruckschieber 19, als auch am Fliehölventil 45 als Steuerdruck. Dem Fliehölventil 45 wird damit ein Druckbereich von 3 bis 5 bar zugeordnet.

In der dargestellten Grundstellung des Fliehölventils 45 ist die Schmierdruckleitung 18 über das Fliehölventil 45 über zwei Anschlüsse mit dem Wandlerzufluss 46 verbunden. In einem ersten Teilstück 48 der ersten Zuführleitung 63 zwischen Fliehölventil 45 und Wandlerzufluss 46 ist eine Blende 49 angeordnet, in einem zweiten, zum ersten Teilstück 48 parallel verlaufenden Teilstück 50 ist kein entsprechendes hydraulisches Bauteil angeordnet. Das zweite Teilstück 50 ist nur in der Grundstellung des Fliehölventils 45 mit der Schmierdruckleitung 18 verbunden. Das erste Teilstück 48 ist dagegen immer mit der Schmierdruckleitung 18 verbunden. Damit wird erreicht, dass in der Schaltstellung des Fliehölventils 45, in der wie oben beschrieben ein sehr hoher Schmierdruck wirkt, über die Blende 49 der Druck am Wandlerzufluss 46 so weit abgesenkt wird, dass Schädigungen des Drehmomentwandlers 47 sicher vermieden werden.

Nach Durchströmen des Drehmomentwandlers 47 strömt das Getriebeöl über einen Wandlerabfluss 51 zu einem Getriebeölkühler 52. Vom Getriebeölkühler 52 werden verschiedene Schmierstellen 53 im Automatikgetriebe mit gekühltem Getriebeöl versorgt.

Der Drehmomentwandler 47 weist eine Überbrückungskupplung 54 auf, die von einem Regelmagnetventil-Wandler 55 angesteuert wird. Das Regelmagnetventil-Wandler 55 stellt dazu entsprechend einer Ansteuerung durch die elektronische Steuereinrichtung in einer Leitung 56, die mit einem nicht dargstellten Druckraum der Überbrückungskupplung 54 verbunden ist, einen Betätigungsdruck ein. Der Drehmomentwandler 47 ist damit als so genannter 3-Kanal-Wandler ausgeführt. Das Regelmagnetventil-Wandler 55 ist ebenfalls als Direktsteuerventil ausgeführt und wird mit Arbeitsdruck versorgt. Als Besonderheit wird dem Regelmagnetventil-Wandler 55 als Vorsteuerung ein einem Innendruck des Drehmomentwandlers 47, welcher gegen den Betätigungsdruck an der Überbrückungskupplung 54 wirkt, entsprechender Druck zugeführt. Der genannte Druck wirkt gleichsinnig zur Kraft des Elektromagneten des Regelmagnetventils-Wandler 55 und wird in einer Leitung 58 abgegriffen, die über eine erste Blende 59 mit dem Wandlerzufluss 46 und über eine zweite Blende 60 mit dem Wandlerabfluss 51 verbunden ist. Bei geeigneter Wahl der Blenden 59 und 60 entspricht der Druck in der Leitung 58 dem Innendruck des Drehmomentwandlers 47. Die Wirkungsweise der Rückführung und die Ableitung des Innendrucks sind in der DE 10 2004 012 117 A1 ausführlich beschrieben.

Die Gangwechsel-Kolben-Zylindereinheiten 36, 37 und 39 der Lamellenkupplungen weisen jeweils einen Fliehölraum 62 auf, die über eine Fliehölleitung 64 mit dem Getriebekühler 52 und damit zumindest indirekt mit der ersten Zuführleitung 63 verbunden sind. Der Fliehölraum 62 ist bezüglich eines Gangwechselkolbens 65, der auf die Lamellenkupplungen wirkt, gegenüber dem Gangwechsel-Druckraum 41 angeordnet. Sofern der Fliehölraum 62 ausreichend mit Getriebeöl gefüllt ist, gleichen sich die durch Rotation der Gangwechsel-Kolben-Zylindereinheiten 36, 37 und 39 entstehenden Druckanstiege im Gangwechsel-Druckraum 41 und im Fliehölraum 62 aus.

In einigen Situationen, beispielsweise bei bestimmten Schaltungen im Automatikgetriebe ist ein funktionierender Fliehölausgleich, also ausreichend gefüllte Fliehölräume 62 wichtig. In diesen Situationen kann über einen entsprechenden Druck des Regelmagnetventil-Schmierdrucks 20 das Fliehölventil 45 wie oben beschrieben in seine Schaltstellung gebracht werden. In dieser Schaltstellung wird über das Fliehölventil 45 eine Verbindung zwischen der Schmierölleitung 18 und einer zweiten Zuführleitung 66, welche in die Fliehölleitung 64 mündet, hergestellt. Damit wird der Fliehölleitung 64 nicht nur über die erste Zuführleitung 63 sondern auch über die zweite Zuführleitung 66 Getriebeöl zugeführt. Damit können die Fliehölräume 62 der Gangwechsel-Kolben-Zylindereinheiten 36, 37 und 39 sehr schnell gefüllt und damit ein funktionierender Fliehölausgleich erreicht werden.

In der zweiten Zuführleitung 66 ist eine Blende 67 angeordnet. Über diese Blende 67 und die Blende 49 im ersten Teilstück 48 der ersten Zuführleitung 63 können Durchflussmengen des Getriebeöls in die erste und zweite Zuführleitung 63, 66 eingestellt werden. In der Fliehölleitung 64 kann ein Rückschlagventil so abgeordnet sein, dass ein Rückfluss von Getriebeöl von der zweiten Zuführleitung 66 in Richtung Getriebekühler 52 verhindert wird.

Die hydraulische Steuerung weist außerdem ein Parksperrenbetätigungssystem 68 auf, mittels welchem eine nicht dargestellte Parksperre ein- und ausgelegt werden kann. Das Parksperrenbetätigungssystem 68 verfügt über eine Parksperren-Kolben-Zylindereinheit 69 mit einem Parksperrenkolben 70, der zumindest mittelbar mit einer so genannten, nicht dargestellten Parksperrenklinke verbunden ist. Durch Verschieben des Parksperrenkolbens 70 in eine erste Betätigungsrichtung 71 wird die Parksperre aus- und bei einem Verschieben in eine, der ersten Betätigungsrichtung 71 entgegen gesetzten zweiten Betätigungsrichtung 72 eingelegt. Ist die Parksperre eingelegt, so wird diese Stellung im Folgenden als P-Stellung bezeichnet, ist die Parksperre nicht eingelegt, so wird diese Stellung als Nicht-P-Stellung bezeichnet. Die Parksperren-Kolben-Zylindereinheit 69 weist einen ersten Parksperren-Druckraum 73 auf. Durch Zuführen von Getriebeöl in den ersten Parksperren-Druckraum 73 kann der Parksperrenkolben 70 in Richtung Nicht-P (erste Betätigungsrichtung 71) verschoben werden. Die Parksperren-Kolben-Zylindereinheit 69 weist auf einer bezüglich dem Parksperrenkolben 70 dem ersten Parksperren-Druckraum 73 entgegen gesetzten Seite einen zweiten Parksperren-Druckraum 74 auf. Durch Zuführen von Getriebeöl in den zweiten Parksperren-Druckraum 74 kann der Parksperrenkolben 70 in Richtung P (zweite Betätigungsrichtung 72) verschoben werden. Die Parksperren-Kolben-Zylindereinheit 69 weist außerdem eine Parksperren-Feder 75 auf, die so angeordnet ist, dass sie auf den Parksperrenkolben 70 eine Federkraft in Richtung P aufbringt.

Die Parksperren-Kolben-Zylindereinheit 69 weist außerdem eine ansteuerbare Rastierung 76 auf, mittels welcher eine Position des Parksperrenkolbens 70 festgelegt werden kann. Die Rastierung 76 verfügt dazu über einen von der elektronischen Steuereinrichtung angesteuerten Hubmagnet 77, der in eine Kontur 78 einer mit dem Parksperrenkolben 70 verbundene Kolbenstange 79 eingreifen kann. Die Rastierung 76 ist so ausgeführt, dass sie in Richtung P überdrückt werden kann. Die genannte Kontur 78 ist dazu so ausgeführt, dass sie den Hubmagnet 77 bei einer Verschiebung des Parksperrenkolbens 70 in Richtung P zurückdrücken kann. Ein Überdrücken der Rastierung 76 in Richtung Nicht-P ist dagegen nicht möglich.

Über einen mit Arbeitsdruck versorgten Parksperrenschieber 80 kann Getriebeöl in den zweiten Parksperren-Druckraum 74 zugeführt werden und so zusätzlich zur Kraft der Parksperren-Feder 75 eine Betätigungskraft in Richtung P aufgebracht werden. Der Parksperrenschieber 80 ist als ein Schaltschieber mit zwei Stellungen ausgeführt. In einer nicht dargestellten P-Stellung ist die Arbeitsdruckleitung 14 über den Parksperrenschieber 80 mit dem zweiten Parksperren-Druckraum 74 verbunden, so dass diesem Getriebeöl zugeführt wird.

Bei einem Verschieben des Parksperrenkolbens 70 in Richtung P muss Getriebeöl aus dem ersten Parksperren-Druckraum 73 abgeführt werden. Damit dies schnell und nur mit geringem Widerstand möglich ist, weist das Parksperrenbetätigungssystem 68 einen als Schaltschieber mit zwei Stellungen ausgeführten Entleerschieber 81 mit großen Durchflussquerschnitten auf, der mit dem ersten Parksperren-Druckraum 73 verbunden ist. In einer dargestellten Entleer-Stellung ist der erste Parksperren-Druckraum 73 über den Entleerschieber 81 mit dem Tank 13 verbunden. Damit muss das Getriebeöl aus dem ersten Parksperren-Druckraum 73 nicht über den Parksperrenschieber 80 mit deutlich kleineren Durchflussquerschnitten in den Tank 13 abgeführt werden, sondern kann ohne großen Widerstand über den Entleerschieber 81 in den Tank 13 abfließen. In einer nicht dargestellten Füll-Stellung des Entleerschiebers 81 ist eine Parksperren-Verbindungsleitung 82, die einen Anschluss des Parksperrenschiebers 80 mit dem Entleerschieber 81 verbindet, über den Entleerschieber 81 mit dem ersten Parksperren-Druckraum 73 verbunden. Damit kann dem ersten Parksperren-Druckraum 73 in der Füll-Stellung des Entleerschiebers 81 Getriebeöl zugeführt werden und so der Parksperrenkolben 70 in Richtung Nicht-P verschoben werden. Als Steuerdruck für die Umschaltung zwischen der Füll- und der Entleerstellung des Entleerschiebers 81 wirkt der Druck in der Parksperren-Verbindungsleitung 82, welcher gegen eine Federkraft einer Entleer-Feder 83 wirkt. Der Entleerschieber 81 ist so ausgeführt, dass er durch die Federkraft der Entleer-Feder 83 in die Entleer-Stellung gebracht werden kann, diese also seine Grundstellung darstellt.

Über den Parksperrenschieber 80 kann die Parksperren-Verbindungsleitung 82 mit der Arbeitsdruckleitung 14 verbunden werden. Der Parksperrenschieber 80 befindet sich dann in einer dargestellten Nicht-P Stellung. Der Entleerschieber 81 befindet sich dabei zunächst noch in der Entleer-Stellung, in der er die Parksperren-Verbindungsleitung 82 so weit abschließt, dass sich in der Parksperren-Verbindungsleitung 82 ein Druck aufbauen kann. Damit wirkt dann in der Parksperren-Verbindungsleitung 82 der Arbeitsdruck, welcher dann auch als Steuerdruck auf den Entleerschieber 81 wirkt und diesen gegen die Federkraft in die Füll-Stellung bringt. Somit wird bei ausreichend hohem Arbeitsdruck dem ersten Parksperren-Druckraum 73 Getriebeöl zugeführt und die Parksperre wird, sofern die Rastierung deaktiviert ist, der Hubmagnet 77 also nicht in die Kontur 78 eingreift, ausgelegt. Dazu muss Getriebeöl aus dem zweiten Parksperren-Druckraum 74 in den Tank 13 abfließen können, weshalb in der Nicht-P Stellung des Parksperrenschiebers 80 der zweite Parksperren-Druckraum 74 über den Parksperrenschieber 80 mit dem Tank 13 verbunden ist.

Auf den Parksperrenschieber 80 wirkt als Steuerdruck der vom Regelmagnetventil-Schmierdruck 20 eingestellte Druck gegen eine Federkraft einer Parksperrenschieber-Feder 84. Dieser Druck wirkt damit als Steuerdruck auf den Schmierdruckschieber 19 als erste Ventileinheit, auf das Fliehölventil 45 als zweite Ventileinheit und den Parksperrenschieber 80 als dritte Ventileinheit. Die Parksperrenschieber-Feder 84 ist so angeordnet, dass sie den Parksperrenschieber 80 in die Nicht-P Stellung bringen kann, diese also die Grundstellung des Parksperrenschiebers 80 darstellt. Der Parksperrenschieber 80 ist so ausgelegt, dass er, wenn keine weiteren Drücke auf ihn wirken, ab einem Steuerdruck von ca. 7 bar die P-Stellung einnimmt. Da das Regelmagnetventil-Schmierdruck 20 maximal 8 bar einstellen kann, ist dem Parksperrenschieber 80 damit ein Druckbereich von 6 bis 8 bar zugeordnet.

Der Parksperrenschieber 80 ist außerdem so mit einer Gegendruckleitung 85 verbunden, dass ein in der Gegendruckleitung 85 Druck gleichsinnig mit der Federkraft der Parksperrenschieber-Feder 84 als Gegendruck gegen den Steuerdruck wirken kann. Bei entsprechend hohem Gegendruck bleibt damit der Parksperrenschieber 80 auch dann in der Nicht-P Stellung stehen, wenn ein Steuerdruck eingestellt ist, bei dem das Fliehölventil 45 in seiner Schaltstellung steht, in der ein schnelles Befüllen der Fliehölhaube 62 möglich ist. Dies ist auch dann gewährleistet, wenn sich auf Grund von Toleranzen, Verschleiß oder Alterung die genannten Druckbereiche verschoben haben und sich überlappen. Die Gegendruckleitung 85 ist über eine Kugelumschaltventil 86 mit den Gangwechsel-Druckräumen 41 der Gangwechsel-Kolben-Zylindereinheiten 37 und 39 verbunden. Das Kugelumschaltventil 86 ist dabei so angeordnet, dass der höhere der beiden in den genannten Drückräumen 41 als Gegendruck am Parksperrenschieber 80 wirkt. Ist eine der beiden den Gangwechsel-Kolben-Zylindereinheiten 37 und 39 zugeordneten Lamellenkupplungen betätigt und damit geschlossen, ist der Gegendruck ausreichend groß, um den Wechsel des Parksperrenschiebers 80 in die P-Stellung zu verhindern. Die hydraulische Steuerung ist so ausgelegt, dass eine der beiden Kupplungen in allen Gängen geschlossen ist, in denen eine Ansteuerung des Fliehölventils 45 notwendig sein kann.

Soll die Parksperre bei sehr geringem oder keinem Arbeitsdruck, also beispielsweise bei stehendem Verbrennungsmotor 11 und damit stehender Hauptpumpe 10 eingelegt werden, so wird hierzu die Parksperren-Feder 75 genutzt. Dazu wird der Hubmagnet 77 und damit die Rastierung 76 deaktiviert und die Parksperren-Feder 75 kann den Parksperrenkolben 70 in Richtung P-Stellung verschieben. Aus dem ersten Parksperren-Druckraum 73 muss dabei Getriebeöl abgeführt werden. Da kein oder nur ein sehr geringer Arbeitsdruck zur Verfügung steht, befindet sich der Parksperrenschieber 80 in seiner Grundstellung. Er kann also nicht in die P-Stellung gebracht werden, sondern steht in der Nicht-P Stellung. In der Nicht-P-Stellung des der Parksperrenschiebers 80 besteht über den der Parksperrenschieber 80 außer über Schieberspalte keine Verbindung zwischen der Parksperren-Verbindungsleitung 82 und dem Tank 13. Über den Parksperrenschieber 80 könnte das Getriebeöl deshalb nur sehr langsam in Richtung Tank 13 abfließen. Da in der Parksperren-Verbindungsleitung 82 in diesem Fall auch kein oder nur ein geringer Druck herrscht, befindet sich der Entleerschieber 81 wie oben beschrieben in seiner Entleer-Stellung. Damit kann das Getriebeöl aus dem ersten Parksperren-Druckraum 73 sehr schnell über den Entleerschieber 81 zum Tank 13 abgeführt und die Parksperre damit eingelegt werden.

## Patentansprüche

1. Hydraulische Steuerung für ein Automatikgetriebe eines Kraftfahrzeugs mit einem Parksperrenbetätigungssystem (68), welches über einen Parksperrenschieber (80) und eine Parksperren-Kolben-Zylindereinheit (69) mit einem Parksperrenkolben (70) und einem ersten Parksperren-Druckraum (73) verfügt, wobei durch Zuführen von Betriebsfluid über den Parksperrenschieber (80) in den ersten Parksperren-Druckraum (73) der Parksperrenkolben (70) in eine erste Betätigungsrichtung (71) verschiebbar ist und bei einer Verschiebung des Parksperrenkolbens (70) in eine der ersten Betätigungsrichtung (71) entgegen gesetzten zweiten Betätigungsrichtung (72) Betriebsfluid aus dem ersten Parksperren-Druckraum (73) abgeführt werden muss,
**dadurch gekennzeichnet, dass**
das Parksperrenbetätigungssystem (68) einen Entleerschieber (81) aufweist, mittels welchem der erste Parksperren-Druckraum (73) mit einem Tank (13) verbunden werden kann.

2. Hydraulische Steuerung nach Anspruch 1,
**dadurch gekennzeichnet, dass**
der Parksperrenschieber (80) so ausgeführt ist, dass in seiner Grundstellung über ihn keine Verbindung zwischen einer Parksperren-Verbindungsleitung (82), über welche Betriebsfluid vom Parksperrenschieber (80) zum ersten Parksperren-Druckraum (73) geleitet werden kann, und dem Tank (13) besteht.

3. Hydraulische Steuerung nach Anspruch 1 oder 2,
**dadurch gekennzeichnet, dass**
der Entleerschieber (81) zwischen dem Parksperrenschieber (80) und der Parksperren-Kolben-Zylindereinheit (69) angeordnet ist und zumindest zwei Stellungen aufweist, wobei
- in einer Füll-Stellung die Parksperren-Verbindungsleitung (82) zwischen dem Parksperrenschieber (80) und dem Entleerschieber (81) über den Entleerschieber (81) mit dem ersten Parksperren-Druckraum (73) verbunden ist,
- in einer Entleer-Stellung der erste Druckraum (73) über den Entleerschieber (81) mit dem Tank (13) verbunden ist und die Parksperren-Verbindungsleitung (82) vom Entleerschieber (81) abgeschlossen wird und
- als Steuerdruck für eine Umschaltung zwischen den genannten Stellungen des Entleerschiebers (81) ein Druck in der genannten Parksperren-Verbindungsleitung (82) zwischen dem Parksperrenschieber (80) und dem Entleerschieber (81) auf den Entleerschieber (81) geleitet wird.

4. Hydraulische Steuerung nach Anspruch 3,
**dadurch gekennzeichnet, dass**
der Entleerschieber (81) nur die Füll-Stellung und die Entleer-Stellung aufweist und der Steuerdruck gegen eine Entleer-Feder (83) wirkt, wobei der Entleerschieber (81) durch die Entleer-Feder (83) in die Entleer-Stellung gebracht werden kann.

5. Hydraulische Steuerung nach einem der vorhergehenden Ansprüche,
**dadurch gekennzeichnet, dass**
die Parksperren-Kolben-Zylindereinheit (69) eine Parksperren-Feder (75) aufweist, welche so angeordnet ist, dass sie eine Kraft auf den Parksperrenkolben (70) in Richtung der zweiten Betätigungsrichtung (72) aufbringt.

6. Hydraulische Steuerung nach einem der vorhergehenden Ansprüche,
**dadurch gekennzeichnet, dass**
die Parksperren-Kolben-Zylindereinheit (69) einen zweiten Parksperren-Druckraum (74) aufweist, in den zur Verschiebung des Parksperrenkolbens (70) in die zweite Betätigungsrichtung (72) über den Parksperrenschieber (80) Betriebsfluid zuführbar ist.

7. Hydraulische Steuerung nach einem der vorhergehenden Ansprüche,
**dadurch gekennzeichnet, dass**
die Parksperren-Kolben-Zylindereinheit (69) eine ansteuerbare Rastierung (76) aufweist, mittels welcher eine Position des Parksperrenkolbens (70) festgelegt werden kann.

8. Hydraulische Steuerung nach einem der vorhergehenden Ansprüche,
**gekennzeichnet durch**
ein Vorsteuerventil (20) und eine erste und eine zweite Ventileinheit (20, 45), wobei ein mittels des Vorsteuerventils (20) eingestellter Vorsteuerdruck als Steuerdruck auf die erste und zweite Ventileinheit (20,45) sowie auf den Parksperrenschieber (80) als dritte Ventileinheit leitbar ist und ein mittels einer Gegendruckleitung (85) ein gegen den Steuerdruck wirkender Gegendruck an den Parksperrenschieber (80) angelegt und damit eine Betätigung des Parksperrenschiebers (80) verhindert werden kann.

9. Hydraulische Steuerung nach Anspruch 8,
**dadurch gekennzeichnet, dass**
der genannte Gegendruck von einem Druck abgeleitet wird, der hauptsächlich eine andere Funktion erfüllt.

10. Hydraulische Steuerung nach Anspruch 9,
**dadurch gekennzeichnet, dass**
ein Umschaltventil (86) vorgesehen ist, mittels welchem der Gegendruck von einem ersten oder von einem zweiten Druck abgeleitet werden kann.

11. Hydraulische Steuerung nach Anspruch 9 oder 10,
**dadurch gekennzeichnet, dass**
der Gegendruck von einem Betätigungsdruck eines Schaltelements (37, 39) des Automatikgetriebes abgeleitet wird.

## Claims

1. Hydraulic control unit for an automatic transmission of a motor vehicle having a parking brake activating system (68) which has a parking brake valve (80) and a parking brake piston-cylinder unit (69) with a parking brake piston (70) and a first parking brake pressure chamber (73), wherein by supplying operating fluid via the parking brake valve (80) into the first parking brake pressure chamber (73) the parking brake piston (70) can be displaced in a first activating direction (71), and wherein, upon displacement of the parking brake piston (70) in a second activating direction (72) counter to the first activating direction (71), operating fluid must be removed from the parking brake pressure chamber (73)
**characterised in that**
the parking brake activating system (68) has a discharge valve (81), by means of which the first parking brake pressure chamber (73) can be connected to a tank (13).

2. Hydraulic control unit according to claim 1,
**characterised in that**
the parking brake valve (80) is configured so that in its base position there is no connection between a parking brake connecting line (82), via which operating fluid can be conveyed from the parking brake valve (80) to the first parking brake pressure chamber (73), and the tank (13).

3. Hydraulic control unit according to claim 1 or 2,
**characterised in that**
the discharge valve (81) is disposed between the parking brake valve (80) and the parking brake piston-cylinder unit (69) and has at least two positions, wherein
- in a fill position, the parking brake connecting line (82) between the parking brake valve (80) and the discharge valve (91) is connected via the discharge valve (81) to the first parking brake pressure chamber (73),
- in a discharge position, the firstpressure chamber (73) is connected via the discharge valve (81) to the tank (13) and the parking brake connecting line (82) is closed by the discharge valve (81), and
- by way of control pressure for a switch between said positions of the discharge valve (81) a pressure is conveyed in said parking brake connecting line (82) between the parking brake valve (80) and the discharge valve (81) to said discharge valve (81).

4. Hydraulic control unit according to claim 3,
**characterised in that**
the discharge valve (71) only has a fill position and a discharge position, and the control pressure acts against a discharge spring (83), wherein the discharge valve (81) can be brought (81) through the discharge spring (83) into the discharge position.

5. Hydraulic control unit according to one of the preceding claims,
**characterised in that**
the parking brake piston-cylinder unit (69) has a parking brake spring (75) which is disposed so that it applies a force to the parking brake piston (70) in the second activating direction (72).

6. Hydraulic control unit according to one of the preceding claims,
**characterised in that**
the parking brake piston-cylinder unit (69) has a second parking brake pressure chamber (74), into which operating fluid can be supplied in order to displace the parking brake piston (70) in the second activating direction (72), via the parking brake valve (80).

7. Hydraulic control unit according to one of the preceding claims,
**characterised in that**
the parking brake piston-cylinder unit (69) has a controllable engagement element (76), by means of which a position of the parking brake piston (70) can be fixed.

8. Hydraulic control unit according to one of the preceding claims,
**characterised by**
a pre-control valve (20) and a first and a second valve unit (20, 45), wherein a pre-control pressure set by means of the pre-control valve (20) can be conveyed as control pressure to the first and second valve unit (20, 45) and to the parking brake valve (80) as a third valve unit and a counter pressure acting by means of a counter pressure line (85) against the control pressure can be applied to the parking brake valve (80) and thus prevent activation of the parking brake valve (80).

9. Hydraulic control unit according to claim 8,
**characterised in that**
said counter-pressure is derived from a pressure which mainly performs a different function.

10. Hydraulic control unit according to claim 9,
**characterised in that**
a switch-over valve (86) is provided, by means of which the counter pressure can be derived from a first or a second pressure.

11. Hydraulic control unit according to claim 9 or 10,
**characterised in that**
the counter pressure is derived from an activating pressure of a switching element (37, 39) of the automatic transmission.

## Revendications

1. Commande hydraulique pour une transmission automatique d'un véhicule automobile comprenant un système d'actionnement (68) de frein de stationnement, lequel dispose d'une soupape (80) de frein de stationnement et une unité (69) piston - cylindre de frein de stationnement dotée d'un piston (70) de frein de stationnement et d'une première chambre de pression (73) de frein de stationnement, par amenée de fluide de fonctionnement par l'intermédiaire de la soupape (80) de frein de stationnement dans la première chambre de pression (73) de frein de stationnement, le piston (70) de frein de stationnement pouvant être déplacé dans un premier sens d'actionnement (71) et lors d'un déplacement du piston (70) de frein de stationnement dans un second sens d'actionnement (72) opposé au premier sens d'actionnement (71), le fluide de fonctionnement devant être évacué de la première chambre de pression (73) du frein de stationnement, **caractérisée en ce que** le système d'actionnement (68) de frein de stationnement présente une soupape de décharge (81) qui permet de relier la première chambre de pression (73) de frein de stationnement à un réservoir (13).

2. Commande hydraulique selon la revendication 1, **caractérisée en ce que** la soupape (80) de frein de stationnement est conçue de telle sorte que dans sa position initiale par son intermédiaire aucune liaison entre la conduite de liaison (82) de frein de station, par l'intermédiaire de laquelle le fluide de fonctionnement peut être acheminé entre la soupape (80) de frein de stationnement et la première chambre de pression (73) de frein de stationnement, et le réservoir (13) n'ait lieu.

3. Commande hydraulique selon la revendication 1 ou la revendication 2, **caractérisée en ce que** la soupape de décharge (81) est disposée entre la soupape (80) de frein de stationnement et l'unité (69) cylindre - piston de frein de stationnement et dispose d'au moins deux positions,
- dans une position de remplissage, la conduite de liaison (82) de frein de station étant reliée entre la soupape (80) de frein de stationnement et la soupape de décharge (81) au moyen de la soupape de décharge (81) à la première chambre de pression (73) de frein de stationnement,
- dans une position de décharge, la première chambre de pression (73) est reliée par l'intermédiaire de la soupape de décharge (81) au réservoir (13) et la conduite de liaison (82) de frein de stationnement étant fermée par la soupape de décharge (81) et
- en tant que pression de commande pour une commutation entre lesdites positions de la soupape de décharge (81), une pression dans ladite conduite de liaison (82) de frein de stationnement étant acheminée entre la soupape (80) de frein de stationnement et la soupape de décharge (81) sur la soupape de décharge (81).

4. Commande hydraulique selon la revendication 3, **caractérisée en ce que** la soupape de décharge (81) présente uniquement la position de remplissage et la position de décharge et la pression de commande agit contre un ressort de décharge (83), la soupape de décharge (81) pouvant être amenée dans la position de décharge par le ressort de décharge (83).

5. Commande hydraulique selon l'une quelconque des revendications précédentes, **caractérisée en ce que** l'unité (69) cylindre - piston de frein de stationnement présente un ressort (75) de frein de stationnement qui est disposé de telle sorte qu'il applique une force sur le piston (70) de frein de stationnement dans le sens du second dispositif d'actionnement (72).

6. Commande hydraulique selon l'une quelconque des revendications précédentes, **caractérisée en ce que** l'unité (69) cylindre - piston de frein de stationnement présente une seconde chambre de pression (74) de frein de stationnement dans laquelle du fluide de fonctionnement peut être amené pour déplacer le piston (70) de frein de stationnement dans le second dispositif d'actionnement (72) par l'intermédiaire de la soupape (80) de frein de stationnement.

7. Commande hydraulique selon l'une quelconque des revendications précédentes, **caractérisée en ce que** l'unité (69) cylindre - piston de frein de stationnement présente un dispositif d'arrêt (76) pilotable qui permet de déterminer une position du piston (70) de frein de stationnement.

8. Commande hydraulique selon l'une quelconque des revendications précédentes, **caractérisée par** une soupape pilote (20) et une première et une seconde unité de soupape (20, 45), une pression de pilotage réglée par la soupape pilote (20) pouvant être amenée en tant que pression de commande sur la première et la seconde unité de soupape (20, 45) ainsi que sur la soupape (80) de frein de stationnement en tant que troisième unité de soupape et une contre-pression agissant contre la pression de commande au moyen d'une conduite de contre-pression (85) pouvant être appliquée sur la soupape (80) de frein de stationnement et empêchant ainsi un actionnement de la soupape (80) de frein de stationnement.

9. Commande hydraulique selon la revendication 8, **caractérisée en ce que** ladite contre-pression est détournée d'une pression qui principalement remplit une autre fonction.

10. Commande hydraulique selon la revendication 9, **caractérisée en ce qu'**il est prévu une soupape de commutation (86) qui permet de détourner la contre-pression d'une première et d'une seconde pression.

11. Commande hydraulique selon la revendication 9 ou la revendication 10, **caractérisée en ce que** la contre-pression est détournée d'une pression d'actionnement d'un élément de commande (37, 39) de la transmission automatique.
